# EUROPÄISCHE PATENTANMELDUNG

(11) **EP 0 676 439 A1**
(43) Veröffentlichungstag der Anmeldung: **11.10.1995**
(21) Anmeldenummer: 95104704.2
(22) Anmeldetag: 30.03.1995
(51) Int. Cl.: C08J 7/04, B05D 5/04, B05D 7/04

(54) **Bedruckbare Folie**

(30) Priorität: 08.04.1994 DE 4411868
(71) Anmelder: BASF AKTIENGESELLSCHAFT, D-67056 Ludwigshafen (DE)
(72) Erfinder: Eichner, Leonhard,, 67067 Ludwigshafen (DE); Fischer, Hans,, 67063 Ludwigshafen (DE)

(57) **Zusammenfassung**

Bedruckbare Folie, aufgebaut aus
A) einer Kunststoffolie und
B) einer mindestens einseitig aufgebrachten wäßrigen Mischung, enthaltend
   b₁) eine wäßrige Dispersion eines radikalischen Polymeren oder eines Polyurethans
   b₂) ein Polyisocyanat und
   b₃) ein pulverförmiges Pigment.

## Beschreibung

Diese Erfindung betrifft eine bedruckbare Folie, aufgebaut aus
A) einer Kunststoffolie und
B) einer mindestens einseitig aufgebrachten wäßrigen Mischung, enthaltend
   b₁) eine wäßrige Dispersion eines radikalischen Polymeren oder eines Polyurethans
   b₂) ein Polyisocyanat und
   b₃) ein pulverförmiges Pigment.

Weiterhin betrifft die Erfindung ein Verfahren zur Herstellung der bedruckbaren Folien und ihre Verwendung zur Herstellung von Etiketten.

Aus der EP-A-158 925 sind bedruckbare Folien bekannt, die durch Beschichtung z.B. von Polyolefinfolien mit einer Lösung oder Dispersion eines Haftvermittlers und anschließende Auftragung eines Gemischs aus einem Bindemittel und einem Pigment erhalten werden. Bei der Herstellung der Folien sind daher zwei Beschichtungsvorgänge notwendig.

Die Bedruckbarkeit bisher bekannter bedruckbarer Folien ist weiter zu verbessern. Die Druckfarbe soll auf den Folien gut haften, die Formen der gedruckten Symbole sollen möglichst scharf sein (gute Lesbarkeit) und es ist eine gute Druckbrillanz gewünscht.

Aufgabe der vorliegenden Erfindung waren daher bedruckbare Folien, welche durch ein einfaches Verfahren, möglichst nur in einem Beschichtungsvorgang herstellbar sind und eine gute Bedruckbarkeit zeigen.

Die Aufgabe wurde gelöst durch die eingangs definierte bedruckbare Folie.

Bei der Kunststoffolie A) kann es sich z.B. um eine Folie aus Polyvinylchlorid oder Polystyrol handeln. Bevorzugt sind Kunststoffolien aus unpolaren Polymeren, besonders bevorzugt aus Polyolefinen, z.B. Polyethylen oder Polypropylen. Die Oberfläche der Kunststoffolie A) braucht zur Beschichtung mit der Mischung B) nicht in irgendeiner besonderen Weise vorbehandelt zu sein, gegebenenfalls ist lediglich die übliche elektrische Vorbehandlung (corona-Entladung) zu empfehlen.

Die Mischung B) enthält eine wäßrige Dispersion eines radikalischen Polymerisats oder eines Polyurethans b₁), ein Polyisocyanat b₂) und ein pulverförmiges Pigment b₃).

Das Polyurethan kann z.B. durch eingebaute hydrophile ionische oder nicht ionische Gruppen oder durch zugesetzte Emulgatoren in Wasser dispergiert vorliegen.

Geeignete Polyurethane bestehen z.B. zum großen Teil, im allgemeinen zu mehr als 80 Gew.-%, bezogen auf das Polyurethan, aus Diisocyanaten, sowie gegebenenfalls deren Uretdione oder Isocyanurate und Dihydroxylverbindungen mit einem Molgewicht über 500 bis 5000 g/mol.

Als Diisocyanate kommen sowohl aliphatische, aromatische als auch araliphatische Diisocyanate wie Tetramethylendiisocyanat, Hexamethylendiisocyanat, Dodecamethylendiisocyanat, 1,4-Diisocyanatocyclohexan, 4,4'-Di-(isocyanatocyclohexyl)-methan, Trimethylhexandiisocyanat, 1-Isocyanato-3,3,5-trimethyl-5-isocyanatomethylcyclohexan (Isophorondiisocyanat), 2,4-Diisocyanatotoluol, 2,6-Diisocyanatotoluol, Tetramethylxlylendiisocyanat, 1,4-Diisocyanatobenzol, 4,4'-Diisocyanatodiphenylmethan, p-Xylylendiisocyanat, sowie Isopropenyldimethyltoluylendiisocyanat in Betracht.

Geeignete Dihydroxylverbindungen mit einem Molekulargewicht über 500 bis 5000 sind die bekannten Polyester, Polyether, Polythioether, Polylactone, Polyacetale, Polycarbonate und Polyesteramide mit 2 Hydroxylgruppen. Bevorzugt sind solche Dihydroxylverbindungen, deren Molekulargewicht zwischen 750 und 3000 liegt. Selbstverständlich können auch Gemische dieser Dihydroxylverbindungen eingesetzt werden.

Bevorzugt handelt es sich bei b₁) um ein radikalisches Polymerisat.

Das radikalische Polymerisat enthält vorzugsweise sogenannte Hauptmonomere ausgewählt aus C₁-C₂₀-Alkyl(meth)acrylaten, Vinylestern, von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen.

Als Hauptmonomere zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylherylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren, und Chloropren, sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit C₁-C₂₀-Alkyl(meth)acrylaten, insbesondere mit C₁-C₈-Alkyl(meth)acrylaten, oder nicht aromatischen Kohlenwasserstoffen wie Isopren oder vorzugsweise Butadien eingesetzt.

Ganz besonders geeignete Hauptmonomere sind (Meth)acrylsäurealkylester, deren Mischungen oder deren Mischungen mit Styrol.

Das Polymer kann überwiegend (mehr als 50 Gew.-% insbesondere mehr als 80 Gew.-%) oder ganz aus den Hauptmonomeren aufgebaut sein.

Neben diesen Hauptmonomeren kann das Polymerisat z.B. untergeordnete Mengen an weiteren Monomeren enthalten. Als solche zu nennen sind z.B. (Meth)acrylamid, Monomere mit Carbonsäure- oder Carbonsäureanhydridgruppen wie (Meth)acrylsäure, Itaconsäure, Maleinsäure- oder Fumarsäureanhydrid und hydroxyfunktionelle Monomere z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind (Meth)acrylsäure-C₂-C₈-hydroxyalkylester, wie n-Hydroxyethyl-, n-Hydroxypropyl- oder n-Hydroxybutyl(meth)acrylat.

Besonders bevorzugt enthält das radikalische Polymer freie Hydroxygruppen, welche z.B. durch die vorstehend genannten Hydroxygruppen enthaltenden Monomeren im Polymer eingebaut sind.

Die Hydroxyzahl des radikalischen Polymeren beträgt besonders bevorzugt 1 bis 500 mg KOH/g Polymer, ganz besonders bevorzugt 5 bis 300 mg KOH/g Polymer (nach DIN 53240).

Bevorzugt sind auch radikalische Polymere mit einem Gehalt an Monomeren mit mindestens einer Carbonylgruppe. Vorzugsweise beträgt der Gehalt an Carbonylgruppen (Mg 28) 0,01 bis 10, besonders bevorzugt 0,05 bis 3 Gew.-%, bezogen auf das Polymer. Den Dispersionen dieser Polymeren wird vorzugsweise ein Vernetzungsmittel für die Carbonylgruppen, z.B. Dihydrazide, in etwa vorzugsweise äquivalenten Mengen zugesetzt.

Auch das Polyurethan hat vorzugsweise noch freie Hydroxylgruppen, z.B. durch einen Überschuß Diol oder freie Isocyanatgruppen, z.B. durch einen Überschuß Polyisocyanat.

Die Hydroxylzahl des Polyurethan entspricht bevorzugt der des vorstehend genannten radikalischen Polymeren bzw. im Falle freier Isocyanatgruppen ist die Zahl Isocyanatgruppen äquivalent zu der Hydroxylzahl.

Die Herstellung des radikalischen Polymeren erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Polymer durch Lösungspolymerisation mit anschließender Dispergierung in Wasser oder besonders bevorzugt durch Emulsionspolymerisation hergestellt.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Durch Emulsionspolymerisation wird direkt eine wäßrige Dispersion erhalten. Ansonsten kann die Dispersion durch Dispergieren des Polymeren in Wasser hergestellt werden. Übliche Feststoffgehalte des Polymeren in der Dispersion liegen z.B. zwischen 10 und 70, vorzugsweise 20 und 60 Gew.-%.

Die Mischung B) enthält weiterhin ein Polyisocyanat b₂), insbesondere zur Vernetzung des Polyurethan oder radikalischen Polymeren b₁).

Als Polyisocyanat b₂) in Betracht kommen z.B. die bei der Beschreibung des Polyurethan genannten Diisocyanats bzw. deren Uretdione, Isocyanurate oder auch Umsetzungsprodukte mit Di- oder Polyalkoholen. Die Polyisocyanate haben vorzugsweise eine Isocyanatfunktionalität von 2 bis 7, besonders bevorzugt von 2 bis 5 oder ganz besonders bevorzugt von 2,3 bis 4. Der Isocyanatgehalt beträgt vorzugsweise 10 bis 50, besonders bevorzugt 15 bis 40 Gew.-%. Die Polyisocyanate liegen vorzugsweise durch Zusatz eines Emulgators in Wasser emulgiert vor.

Besonders bevorzugt sind Umsetzungsprodukte eines Polyisocyanats mit einem ein- oder mehrwertigen, nicht ionischen Polyetheralkohol, welcher mindestens eine mindestens 5 Alkylenoxideinheiten aufweisende Polyetherkette enthält, als Emulgator.

Vorzugsweise enthält dieser Emulgator noch freie Isocyanatgruppen. Bei den Alkylenoxideinheiten handelt es sich vorzugsweise um Ethylen- oder Propylenoxid, besonders bevorzugt um Ethylenoxid. Die Anzahl der Alkylenoxideinheiten beträgt vorzugsweise mindestens 10 und übersteigt im allgemeinen nicht 100.

Die Menge des Emulgators wird so gewählt, daß sie zur Dispergierung des Polyisocyanats ausreichend ist.

Im allgemeinen ist eine Menge von 0,5 bis 20 Gew.-% des Emulgators, bezogen auf das Polyisocyanat b₂) ausreichend.

Geeignete Mischungen aus Polyisocyanat und Emulgator sind z.B. auch in der EP-A-61 628 und EP-A-206 059 und DE-A-24 47 135 beschrieben.

Die Menge des Polyisocyanats b₂) wird vorzugsweise im Überschuß bzw. in mindestens äquimolaren Mengen der Isocyanatgruppen von b₂), bezogen auf die Hydroxylgruppen bzw. Isocyanatgruppen von b₁) eingesetzt.

Pulverförmige Pigmente b₃) können weiße oder farbige Pigmente sein. Bevorzugt sind Weißpigmente wie Titandioxid, Aluminiumoxid, Bariumsulfat, Kieselsäure, Silikate und Kreide.

Es kann sich sowohl um anorganische als auch organische Pigmente handeln. Die mittlere Teilchengröße der Pigmente liegt vorzugsweise im Bereich von 0,001 bis 5 µm, besonders bevorzugt zwischen 0,02 und 0,4 µm. Die Pigmentteilchen weisen vorzugsweise eine mikroporöse Struktur auf und haben so eine große Oberfläche.

Die Pigmente werden vorzugsweise in einer Menge von 5 Gew.-% bis 500 Gew.-%, bevorzugt 10 bis 300 Gew.-%, besonders bevorzugt 70 bis 250 Gew.-%, bezogen auf das radikalische Polymer oder Polyurethan b₁) verwendet.

Die Mischung B) kann in einfacher Weise hergestellt werden z.B. indem das Polyisocyanat b₂) zur wäßrigen Dispersion b₁) gegeben wird und die Dispersion dann mit dem Pigment nach bekannten Verfahren gemischt wird.

Die Mischung B) kann nach bekannten Verfahren z.B. Aufrollen, Rakeln, Aufsprühen auf die Kunststoffolie A) aufgebracht werden. Die Kunststoffolie braucht nicht vorbehandelt bzw. vorbeschichtet werden. Ein Haftvermittler ist nicht notwendig.

Die Auftragsmenge liegt vorzugsweise zwischen 0,1 g/m² und 20 g/m², besonders bevorzugt zwischen 2 g/m² und 15 g/m².

Die Mischung kann auf beide Seiten oder eine Seite der Folie aufgetragen werden.

Nach Trocknung ist die mit der Mischung beschichtete Seite bedruckbar.

Vorteile der erfindungsgemäßen Folie liegen in der einfachen Herstellung sowie guten Bedruckbarkeit (gute Haftung, geringer Abrieb, gute Planlage der beschichteten Folie).

Die erfindungsgemäßen Folien eignen sich z.B. besonders zur Herstellung von Etiketten bzw. bedruckten Etiketten, welche z.B. mit Strichcodes oder insbesondere im Thermotransferdruckverfahren bedruckt sind.

Zur Herstellung von Etiketten werden erfindungsgemäße Folien, welche nur auf einer Seite mit der Mischung B) beschichtet sind, zurecht geschnitten und auf der noch unbeschichteten Seite wird ein Klebstoff, z.B. ein Haftklebstoff aufgetragen. Als Kunststoffolie A) der Etiketten wird dabei insbesondere ein Kunststoff gewählt, der z.B. mit dem Kunststoff auf dem die Etiketten aufgeklebt werden, identisch ist. Es ergibt sich so eine gute Recyclebarkeit des verklebten Verbunds.

### Beispiel

Es wurde eine Folie aus Polyethylen mit einer wäßrigen Mischung aus
- 100 Gew.-Teilen: eines Hydroxylgruppen enthaltenden Polyacrylsäureesters (Acronal® 3424)
- 10 Gew.-Teilen: eines wasseremulgierbaren Polyisocyanats
und
- 200 Gew.-Teilen: Siliciumdioxid als Weißpigment
beschichtet (Auftragsmenge 9 g) und die Haftung und der Abrieb der Beschichtung geprüft.

Zum Vergleich wurde eine handelsübliche Folie aus Polyethylen, welche mit einem Haftvermittler und einem Polymeren gemäß der EP-A-158 925 beschichtet ist, geprüft.

| | Beispiel | Vergleichsbeispiel |
|---|---|---|
| Tesahaftung*) | gut | gut |
| Abrieb**) | kein Abrieb | kein Abrieb |

| | | |
|---|---|---|
| *) Bei der Tesahaftung wurde ein Klebstreifen auf die Beschichtung geklebt und nach Abzug des Streifens der Rückstand auf den Klebestreifen beurteilt (gut = kaum Rückstand) | | |
| **) Beim Abriebtest wurde mit dem nassen Daumen 30mal über die Beschichtung gerieben | | |

## Patentansprüche

1. Bedruckbare Folie, aufgebaut aus
A) einer Kunststoffolie und
B) einer mindestens einseitig aufgebrachten wäßrigen Mischung, enthaltend
b₁) eine wäßrige Dispersion eines radikalischen Polymeren oder eines Polyurethans
b₂) ein Polyisocyanat und
b₃) ein pulverförmiges Pigment.

2. Bedruckbare Folie gemäß Anspruch 1, wobei die Folie A) aus Polyethylen oder Polypropylen besteht.

3. Bedruckbare Folie gemäß Anspruch 1 oder 2, wobei es sich bei b₁) um ein Hydroxylgruppen aufweisendes radikalisches Polymerisat handelt.

4. Bedruckbare Folie gemäß einem der Ansprüche 1 bis 3, wobei es sich bei dem pulverförmigen Pigment um ein Weißpigment, ausgewählt aus Titandioxid, Aluminiumoxid, Bariumsulfat, Kieselsäure, Silikaten und Kreide handelt.

5. Bedruckbare Folie gemäß einem der Ansprüche 1 bis 4, wobei das Polyisocyanat b₂) mit Hilfe eines Umsetzungsproduktes eines Polyisocyanats mit einem ein oder mehrwertigen, nicht ionischen Polyetheralkohol, welcher mindestens eine mindestens 5 Ethylenoxideinheiten aufweisende Polyetherkette enthält, als Emulgator in Wasser dispergiert ist.

6. Verfahren zur Herstellung einer bedruckbaren Folie, dadurch gekennzeichnet, daß eine unbeschichtete Kunststoffolie A) mit einer Mischung B) beschichtet wird.

7. Verwendung einer bedruckbaren Folie gemäß einem der Ansprüche 1 bis 5 zur Herstellung von Etiketten.

8. Etiketten, erhältlich unter Verwendung einer Folie gemäß einem der Ansprüche 1 bis 5.

9. Bedruckte Etiketten, erhältlich unter Verwendung einer Folie gemäß einem der Ansprüche 1 bis 5.

10. Mit Strichcodes bedruckte Etiketten, erhältlich unter Verwendung einer Folie gemäß einem der Ansprüche 1 bis 5.
